(19) Europäisches Patentamt

European Patent Office

Office européen des brevets

(11) **EP 0 753 868 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.$^7$: **H01G 9/012**

(21) Anmeldenummer: **96109912.4**

(22) Anmeldetag: **20.06.1996**

(54) **Elektrolytkondensator, insbesondere Tantal-Elektrolytkondensator**

Electrolytic capacitor, especially tantalum electrolytic capacitor

Condensateur électrolytique, en particulier condensateur électrolytique en tantale

(84) Benannte Vertragsstaaten:
**CH DE FR GB IT LI SE**

(30) Priorität: **11.07.1995 DE 19525143**

(43) Veröffentlichungstag der Anmeldung:
**15.01.1997 Patentblatt 1997/03**

(73) Patentinhaber: **BIOTRONIK Mess- und Therapiegeräte GmbH & Co Ingenieurbüro Berlin**
**12359 Berlin (DE)**

(72) Erfinder:
• **Popp, Thomas**
 **90443 Nürnberg (DE)**
• **Bolz, Armin**
 **91054 Buckenhof (DE)**

(74) Vertreter: **Rau, Manfred, Dr. Dipl.-Ing.**
 **Rau, Schneck & Hübner**
 **Patentanwälte**
 **Königstrasse 2**
 **90402 Nürnberg (DE)**

(56) Entgegenhaltungen:
 **WO-A-93/02739          DE-A- 4 209 910**

• **PHYSICA STATUS SOLIDI A, Bd. 140, Nr. 1, 16.November 1993, GERMANY, Seiten 201-206, XP002030832 MENGUE ET AL.: "Experimental data on the dynamic behaviour of a metal capacitor with fractal structure"**

**Beschreibung**

Die Erfindung betrifft einen Elektrolytkondensator und insbesondere einen Tantal-Elektrolytkondensator mit den im Oberbegriff des Anspruches 1 angegebenen Merkmalen.

Derartige Elektrolytkondensatoren, wie sie in vielerlei Bauformen und -größen aus dem Stand der Technik bekannt sind, bestehen üblicherweise aus einer Metallanode, beispielsweise einer gesinterten Tantalanode oder einer Aluminium-Anodenfolie, auf die durch sogenannte Formierung - also im allgemeinen durch einen Elektrolyseprozeß bzw. durch anodische Oxidation - eine dünne nichtleitende Isolierschicht zur Bildung des Dielektrikums des Elektrolytkondensators aufgebracht wird. Im Falle einer Tantalanode besteht die Isolierschicht aus Tantalpentoxid. Bei einem Aluminium-Elektrolytkondensator ist die Isolierschicht aus Aluminiumoxid gebildet.

Die Kathode des Elektrolytkondensators besteht aus einem flüssigen oder pastösen Elektrolyten in Form eines Ionenleiters, beispielsweise verdünnter Schwefel- oder Phosphorsäure, bei einem Tantalkondensator, oder Tartrat- bzw. Boratlösungen in Ethylenglykol bei Aluminium-Elektrolytkondensatoren. Auch ein fester Elektrolyt in Form eines Elektronenleiters ist denkbar.

Zur Stromzuführung zum Elektrolyten ist ein flächiger Kathodenkontakt vorgesehen, bei dem es sich bekanntermaßen um eine Metallfolie oder den Gehäusebecher des Kondensators handeln kann.

Bekannte Elektrolytkondensatoren haben verglichen zu Kondensatoren anderer Bauart bereits den Vorteil einer sehr hohen spezifischen Kapazität. Die folglich hohe elektrische Speicherfähigkeit bei kleinem Bauvolumen resultiert aus dem äußerst kleinen Elektrodenabstand im Kondensator, der durch die Dicke der dielektrischen Isolierschicht, also der Oxidschicht, auf der Anode bestimmt ist.

In der Mikroelektronik stellt nun die Miniaturisierung von Baugruppen und Geräten ein Entwicklungsziel dar, das speziell in der biomedizinischen Technik bei der Konstruktion von implantierbaren Geräten - wie beispielsweise Herzschrittmachern - einen hohen Stellenwert besitzt. Während aktive Bauelemente im Zuge einer steigenden Integrationsdichte in den letzten Jahren ständig verkleinert werden konnten, wurden bei den passiven Bauelementen und besonders bei Hochspannungskondensatoren nur vergleichsweise geringe Fortschritte erzielt. Trotz verschiedener angewandter Kunstgriffe, wie beispielsweise die Aufrauhung der Anodenelektrode, liegt die derzeitige Grenze der erreichbaren Energiedichte bei Elektrolytkondensatoren im Bereich von 2 J/cm$^3$.

Dieser Begrenzung liegt die Problematik zugrunde, daß Elektrolytkondensatoren und insbesondere nasse Elektrolytkondensatoren aus einer elektrochemisch oxidierten - also formierten - Anode und einem Kathodenkontakt bestehen, die in einen meist wässrigen Elektrolyten tauchen. Das elektrische Ersatzschaltbild einer solchen Anordnung kann durch die Reihenschaltung einer anodischen Kapazität $C_A$, eines Ohmschen Serienwiderstandes $R_{ESR}$ und einer kathodischen Kapazität $C_K$ beschrieben werden. Legt man an einen entsprechenden Kondensator eine Hochspannung U von einigen hundert Volt an, so fällt diese in erster Linie am Oxidfilm der Anode ab. Es gilt

$$U_A = U\text{-}U_K \simeq U.$$

Der Kathodenkontakt besteht meist aus einer nicht formierten oder mit geringer Spannung formierten Elektrode. Sie kann daher nur mit Spannungen unter 1 V (ohne Oxidschicht) oder einigen wenigen Volt (bei einer dünnen Oxidschicht) polarisiert werden, um eine Zersetzung des Elektrolyten zu vermeiden. Die Kapazität $C_K$ des Kathodenkontaktes muß dazu geeignet gewählt werden. Es gilt:

$$Q_A = C_A U_A \; ; \; Q_K = C_K U_K \qquad (1)$$

$$Q_A = Q_K \qquad (2)$$

$$(1) \text{ in } (2)\text{: } C_K = C_A U_A / U_K \qquad (3)$$

Für einen Kondensator mit einer Betriebsspannung von 200 V und einer Kapazität von 150 µF bedeutet dies, daß ein unformierter Kathodenkontakt mindestens eine Kapazität von 30 mF aufweisen muß. Die Oberfläche eines glatten Kathodenkontaktes muß dann mindestens 1000 cm$^2$ betragen. Die Kathodenkontakte in konventionellen Elektrolytkondensatoren erreichen daher meist die Abmessungen der Anoden, was sich naturgemäß nachteilig auf die Baugröße und damit die erreichbare Energiedichte bei den üblichen Elektrolytkondensatoren auswirkt.

Ausgehend von der geschilderten Problematik liegt nun der Erfindung die Aufgabe zugrunde, einen Elektrolytkondensator der gattungsgemäßen Art so weiterzuentwickeln, daß die erreichbare Energiedichte beträchtlich erhöht bzw. umgekehrt - bei einem vorgegebenen Kapazitätswert - die Baugröße des entsprechenden Kondensators erheblich verkleinert werden kann.

Diese Aufgabe wird durch die im Kennzeichnungsteil des Anspruches 1 angegebenen Merkmale gelöst. Demnach ist der flächige Kathodenkontakt des Kondensators zumindest im Bereich seiner Kontaktfläche mit dem Elektrolyten mit einer elektrisch leitenden Oberflächenbeschichtung mit einer fraktalen Struktur versehen.

Eine solche fraktale Oberflächenbeschichtung zeichnet sich dadurch aus, daß auf einer geometrischen Grundfläche eine erhebliche Oberflächenvergrößerung aufgrund der fraktalen Oberflächenbeschichtung stattfindet. Ausgegangen wird dabei von der Überlegung, durch ständige Wiederholung ein und derselben Grundstruktur die durch sie vorgegebene Oberflächenvergrößerung zu potenzieren. Durch das Aufbringen einer bestimmten Grundstruktur auf die geometrische Grundfläche läßt sich die Elektrodenfläche um einen gewissen Prozentsatz vergrößern. Wird nun die so entstandene Oberfläche als neuer Ausgangspunkt genommen und wiederum von der gleichen Struktur - in allerdings verkleinerter Form - überlagert, so ergibt sich erneut eine Erhöhung der aktiven Oberfläche. Durch eine ständige Wiederholung dieses Prozesses entsteht eine Morphologie mit fraktalen, d.h. selbstähnlichen Eigenschaften, deren elektrochemisch aktive Oberfläche durch die geometrische Grundfläche, den Oberflächenvergrößerungsfaktor pro Reproduktion und die Anzahl der Reproduktionsschritte gegeben ist. Auf diese Weise läßt sich die elektrochemisch aktive Oberfläche einer Elektrode praktisch um ein Vielfaches und theoretisch um mehrere Größenordnungen erhöhen.

Als technologisches Verfahren zur Erzeugung solcher fraktaler Oberflächenbeschichtungen hat sich die Kathodenzerstäubung herauskristallisiert. Näheres hierzu ist dem Buch "Die Bedeutung der Phasengrenze zwischen alloplastischen Festkörpern und biologischen Geweben für die Elektrostimulation", Verfasser: Dr. A. Bolz, Verlag Schiele und Schön, Berlin, 1995 zu entnehmen, wo auf den Seiten 65 bis 81 unter 4.3 das Prinzip der fraktalen Elektrode und die technische Lösung zur Herstellung von fraktalen Oberflächenbeschichtungen eingehend beschrieben sind. Die Abhandlung von T.A. Witten et al. "Diffusion-limited aggregation" in PHYSICAL REVIEW B, Vol. 27, No. 9, S. 5686 vom 01. Mai 1983, beschäftigt sich mit den Grundlagen des Schichtwachstums. Dabei wird eine allgemeine Erläuterung darüber gegeben, unter Entstehung welcher Strukturen Materie zusammenwachsen kann. Es wird vor allem deutlich, daß fraktales Schichtwachstum unter speziellen Wachstumsbedingungen möglich ist, wobei der als solcher etablierte Auftragsprozeß - beispielsweise ein Sputter-Prozeß (oder PVD-Prozeß) - nicht über das Gegebene hinaus erweitert werden muß. Vielmehr müssen lediglich spezielle Parameter bei dem ansonsten etablierten Prozeß gewählt werden.

Weiterhin ist darauf hinzuweisen, daß Elektroden mit fraktaler Oberflächenbeschichtung bereits als kardiologische Stimulationselektroden zum Einsatz in der Herzschrittmachertechnik bekannt sind. Es wird auf die PCT-Anmeldung WO 93/02739 verwiesen.

Vorteilhafterweise können fraktale Oberflächenbeschichtungen mit einer spezifischen Kapazität von bis zu 70 mF/cm$^2$ hergestellt werden, indem - wie in den Ansprüchen 2 und 4 näher angegeben ist - durch Kathodenzerstäubung eine Iridium-, Tantal- oder Aluminum-Beschichtung z.B. auf ein Titan-, Tantal- oder Aluminiumsubstrat mit einer typischen Dicke von 5 bis 10 µm aufgebracht wird. Das Substrat kann vom Gehäusebecher des Kondensators (Anspruch 6) oder von einer Kathodenfolie (Anspruch 7) gebildet sein. Solche beschichteten Folien eignen sich sehr gut als Kathode in nassen Elektrolytkondensatoren. Die oben geforderte Kapazität von 30 mF läßt sich dabei auf einer Fläche von unter 1 cm$^2$ bei einem vernachlässigbaren Volumen in der Größenordnung von 0,001 cm$^3$ erreichen. Kombiniert man einen solchen Kathodenkontakt beispielsweise mit einer Tantalsinteranode, die nach den üblichen Verfahren durch Sintern von Tantalpulver im Hochvakuum bei 2000 °C und Anodisieren in verdünnten Säuren hergestellt wurde, lassen sich Elektrolytkondensatoren mit einer Energiedichte von ca. 4 J/cm$^3$ herstellten. Die Energiedichte entspricht dann näherungsweise der Energiedichte der Anode.

Anspruch 3 kennzeichnet vorteilhafte Parameter für das Aufbringen einer fraktalen Beschichtung auf den Kathodenkontakt durch Kathodenzerstäubung. Über die mittlere freie Weglänge der Teilchen im Kathodenzerstäubungsreaktor sind dabei Prozeßdruck p und Substrat-Target-Abstand d in ihrer Wirkung miteinander verknüpft. Aus diesem Grunde wird meist das sogenannte pd-Produkt, dessen bevorzugter Wert im Anspruch 3 angegeben ist, als Maß für all die Reaktionen verwendet, bei denen der Transport der Teilchen in der Gasphase entscheidend ist.

Durch die im Anspruch 5 angegebenen Maßnahmen wird die Kurzschlußsicherheit des erfindungsgemäßen Elektrolytkondensators verbessert.

Die Ansprüche 8 bis 11 betreffen konstruktive Ausgestaltungen von Elektrolytkondensatoren, bei denen Tantal-Sinteranoden eingesetzt werden. Hierbei wird die Verwendung eines fraktal beschichteten Tantal-Kathodenkontaktes aus Gründen der angestrebten Materialgleichheit zwischen Anode und Kathode bevorzugt.

Ein fraktaler Kathodenkontakt läßt sich jedoch auch in einem Aluminium-Elektrolytkondensator einsetzen, wie dies in den Ansprüchen 12 bis 14 näher angegeben ist. Dabei müssen jedoch die Besonderheiten von Aluminiumkondensatoren berücksichtigt werden.

Zum einen können wegen des geringen Schmelzpunktes von Aluminium keine Sinterkörper der geforderten Reinheit hergestellt werden. Es haben sich deshalb Anoden aus einer geätzten Aluminiumfolie durchgesetzt. Zum anderen können in Aluminiumkondensatoren keine stark sauren Elektrolyten mit einer hohen Leitfähigkeit eingesetzt werden. Der Abstand Anode-Kathodenkontakt muß deshalb möglichst gering gehalten werden, um den eingangs erwähnten Serienwiderstand $R_{ESR}$ nicht übermäßig zu erhöhen. In herkömmlichen Aluminiumkondensatoren wird daher eine Anodenfolie und eine Kathodenfolie mit gleichen Abmessungen, die durch eine Lage Papier isoliert werden, aufgerollt. Das Volumen der Anode und des Kathodenkontaktes sind hier nahezu gleich groß.

Bei der erfindungsgemäßen Ausführung eines Aluminium-Elektrolytkondensators nach den Ansprüchen 12 bis 14 wird die Anodenfolie mehrfach gefaltet Die in ihrer geometrischen Fläche - im Vergleich zu herkömmlichen Kondensatoren - reduzierte Kathodenfolie wird mit der Anodenfolie und einer Separationsfolie aufgewickelt. Um eine ungehinderte Diffusion der Ionen von den verschiedenen Anodenfolienlagen zur Kathodenfolie zu gewährleisten, ist die Anodenfolie perforiert (Anspruch 14). So ist es möglich, trotz reduzierter Abmessungen der Kathoden den Diffusionsweg im Elektrolyten gering zu halten. Das Volumen des Kathodenkontaktes und der Separationsfolie ist dabei im Vergleich zu herkömmlichen Kondensatoren erheblich vermindert.

Der Anspruch 15 betrifft Maßnahmen, mit denen die elektrischen Eigenschaften des erfindungsgemäßen Kondensators weiter im Sinne der gestellten Aufgabe verbessert werden können. Durch die demnach vorgesehene Stickstoff-Dotierung der Tantalanode eines erfindungsgemäßen Elektrolytkondensator wird der Leckstrom des Kondensators in einem Spannungsbereich über 200V deutlich gesenkt. Auch wird die Kristallisaton des anodischen Tantaloxids, wie sie beim Spannungen über 200V häufig auftritt, wirkungsvoll verhindert, ohne den Leckstrom zu erhöhen.

Weitere Merkmale, Einzelheiten und Vorteile der Erfindung ergeben sich aus der nachfolgenden Beschreibung, in der Ausführungsbeispiele des Erfindungsgegenstandes anhand der beigefügten Zeichnungen näher erläutert werden. Es zeigen:

Fig. 1 eine schematische, teilweise weggebrochene Perspektivdarstellung eines Elektrolytkondensators in einer ersten Ausführungsform,

Fig. 2 einen schematischen Längsaxialschnitt des Kondensators nach Fig. 1,

Fig. 3 eine schematische, teilweise weggebrochene Perspektivdarstellung eines Elektrolytkondensators in einer zweiten Ausführungsform,

Fig. 4 einen schematischen Längsaxialschnitt des Kondensators nach Fig. 3,

Fig. 5 eine schematische, teilweise weggebrochene Perspektivdarstellung eines Aluminium-Elektrolytkondensators, und

Fig. 6 ein Kurvenschaubild des Entladepulses eines Elektrolytkondensators mit fraktaler Beschichtung des Kathodenkontaktes in Abhängigkeit der Zeit.

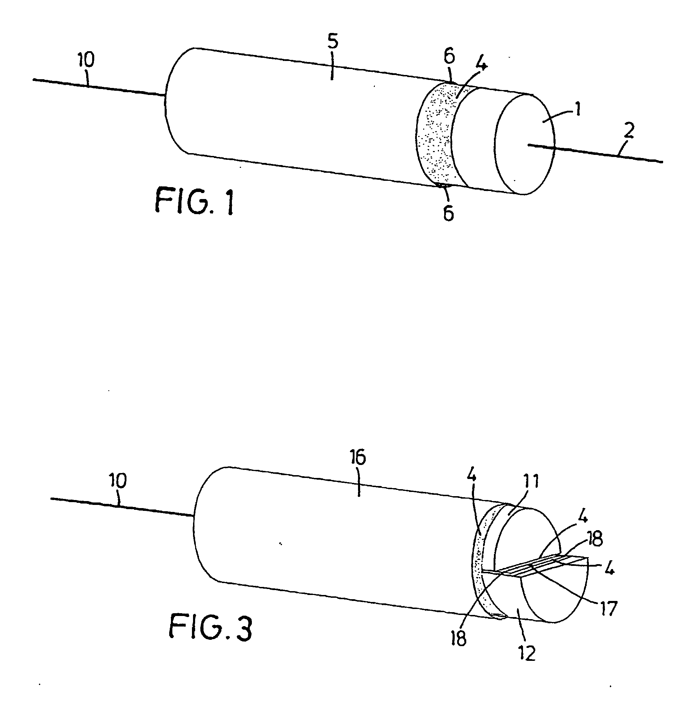

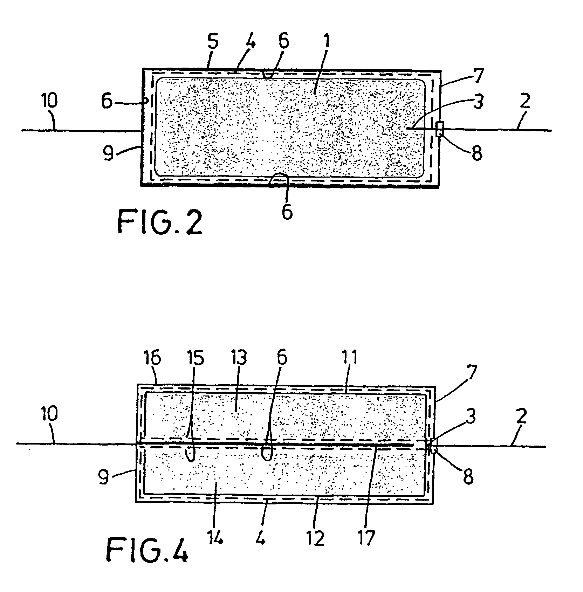

Der in den Fig. 1 und 2 gezeigte Elektrolytkondensator weist die bei Kondensatoren mit nassen Elektrolyten gebräuchliche zylindrische Bauform auf. Seine Tantalanode 1 ist demnach zylinderförmig und durch Pressen von Tantalpulver mit einem organischen Binder, wie z.B. Campher, und anschließendes Sintern im Hochvakuum bei etwa 2000°C hergestellt. Vor dem Sintern wird der Anschlußdraht 2 aus Tantal mit seinem anodenseitigen Ende 3 in den Körper der Tantalanode 1 eingepreßt und dauerhaft damit verbunden.

Eine erfindungsgemäß vorgesehene Nitrierung der gesinterten Tantalanoden wird nach dem eigentlichen Sinterprozeß wie folgt vorgenommen:

Die heiße Anode wird nach dem Sinterprozeß einer Stickstoff-Atmosphäre bei einem typischen Prozeßdruck von 1 mbar ausgesetzt. Stickstoff wird dabei zum Teil als Tantalnitrid chemisch gebunden und zum Teil physikalisch als 2-atomige Stickstoffmoleküle im Tantalmetall gelöst, wofür der sogenannte "Getter-Effekt" verantwortlich ist. Anschließend wird die Stickstoff-Atmosphäre wieder abgepumpt.

In einem zweiten Temper-Schritt bei Temperaturen zwischen 1000 und 2000°C und einem Prozeßdruck unter $10^{-5}$ mbar diffundiert das vorzugsweise oberflächlich gebildete Tantalnitrid in das Volumen der Sinteranode. Der physikalisch gelöste Stickstoff reagiert ebenfalls zu Tantalnitrid. Überschüssiger gelöster Stickstoff wird bei dieser Wärmebehandlung von der Sinteranode wieder abgegeben und abgepumpt. Ein Verdampfen des gebildeten Tantalnitrids unterbleibt aufgrund der hohen Schmelz- und Siedetemperatur dieser Verbindung.

Es hat sich gezeigt, daß sich durch die Nitrierung von Sinteranoden aus Tantal der Leckstrom im Spannungsbereich über 200V deutlich senken läßt. Damit lassen sich höhere Formierspannungen zur Bildung des Dielektrikums erreichen, was zu einer Erhöhung der Nennspannung des Elektrolytkondensators führt. Dies ist gerade für den Einsatz solcher Kondensatoren in Herzschrittmachern und vor allem Defibrillatoren von Vorteil. Letztgenannte Geräte müssen nämlich Spannungen in Größenordnungen von mehr als 100V bereitstellen, um Tachykardien des Herzens wirkungsvoll bekämpfen zu können.

Auf der Tantalanode 1 ist - wie erwähnt - durch Formieren eine (nicht dargestellte) Tantalpentoxid-Schicht aufgebracht, die das Dielektrikum des Kondensators bildet.

Wie insbesondere aus Fig. 2 deutlich wird, wird die Tantalanode 1 allseitig von einer porösen, elektrisch isolierenden Separationsfolie 4 (strichliert dargestellt in Fig. 2) umhüllt, die mit einem sauren Elektrolyten, wie z.B. 1- bis 2-molarer Phosphor- oder Schwefelsäure getränkt ist. Der saure Elektrolyt gewährleistet eine ausreichende Leitfähigkeit der von ihm gebildeten Kathode des Kondensators.

Um eine gute Langzeitstabilität des Kondensators zu gewährleisten, ist die Separationsfolie 4 aus einem chemisch inerten Material hergestellt, wobei sich Glasfaserpapier oder eine PTFE-Membran bewährt haben.

Die Tantalanode 1 mit der sie umhüllenden Separationsfolie 4 ist in einen einseitig offenen, zylindrischen Gehäusebecher 5 eingesetzt, der mit seiner Innenseite einen flächigen Kathodenkontakt des Kondensators zur Stromzuführung zum Elektrolyten in der Separationsfolie 4 bildet. Der Gehäusebecher 5 besteht ebenfalls aus Tantal. Auch Titan oder andere Metalle sind als Material für den Gehäusebecher 5 denkbar.

Auf seiner Innenseite - also im Bereich der Kontaktfläche mit dem Elektrolyten - ist der Gehäusebecher 5 mit einer fraktalen Iridium-Beschichtung 6 versehen, die in dieser Zeichnung durch eine kurze Schraffur angedeutet ist. Diese Iridium-Beschichtung 6 wurde durch Kathodenzerstäubung bei einem Druck p von 0,1 mbar, einem Substrat-Target-Abstand d von etwa 5 cm und Raumtemperatur wie in der angegebenen Literaturstelle von Dr. A. Bolz beschrieben hergestellt. Das sogenannte pd-Produkt beträgt somit etwa 0,5 mbar·cm. Aufgrund der fraktalen Iridium-Beschichtung weist der vom Gehäusebecher 5 gebildete Kathodenkontakt des Kondensators eine gegenüber der geometrischen Fläche dessen Innenseite um 2 bis 3 Größenordnungen größere elektrochemisch aktive Fläche auf, die zu der eingangs erwähnten Erhöhung der Kapazität des Kathodenkontaktes und damit der erreichbaren Energiedichte des Kondensators führt.

Wie aus Fig. 2 ferner deutlich wird, ist die offene Seite des Gehäusebechers 5 durch einen Deckel 7 verschlossen, durch den der Anschlußdraht 2 über eine elektrisch isolierende Durchführung 8 in den Becherinnenraum eintritt. Mit Hilfe dieser isolierenden Durchführung 8 und der die Tantalanode 1 allseitig umgebenden Separationsfolie 4 wird ein Kurzschluß zwischen dem Sinterkörper der Tantalanode 1 und dem Gehäusebecher 5 wirkungsvoll unterbunden.

An der Außenseite des Bodens 9 des Gehäusebechers 5 ist zentral ein Kathodenanschlußdraht 10 zur elektrischen Kontaktierung des den Kathodenkontakt des Kondensators bildenden Gehäusebechers 5 elektrisch leitend befestigt.

Die in den Fig. 3 und 4 gezeigte zweite Ausführungsform eines erfindungsgemäßen Elektrolytkondensators weist eine zweigeteilte formierte Anode auf, die aus zwei halbzylindrischen Tantal-Anodenschalen 11, 12 mit darin eingelegten, halbzylindrischen Sinteranoden 13, 14 aus Tantalpulver zusammengesetzt ist. Die Anodenteile liegen mit den planen Längsseiten 15 der Sinteranoden 13, 14 einander zugewandt in einem zylindrischen Gehäusebecher 16, der wiederum aus Tantal gefertigt ist. Jede Tantal-Anodenschale 11, 12 mit Sinteranode 13, 14 ist jeweils wiederum mit einer Separationsfolie 4 umhüllt, deren Aufbau und Material der Ausführungsform gemäß den Fig. 1 und 2 entspricht. Die Separationsfolie 4 ist wiederum mit einem wässrigen Elektrolyten, beispielsweise einer 1- bis 2-molaren Schwefel- oder Phosporsäure getränkt. Zwischen den beiden Längsseiten 15 der Sinteranode 13, 14 und den diese abdeckenden Abschnitte der Separationsfolie 4 ist als Kathodenkontakt eine Kathodenfolie 17 aus Tantal oder Titan zwischengelegt, die wiederum beidseitig mit einer fraktalen Iridium-Beschichtung 6 in der oben erörterten Weise versehen ist. Die Kathodenfolie 17 ist an ihrem entlang der Innenseite des Gehäusebechers 16 verlaufenden Rand 18 mit dem Gehäusebecher 16 verschweißt.

Die offene Seite des Gehäusebechers 16 ist wiederum durch einen Deckel 7 verschlossen. Über eine elektrisch isolierende Durchführung 8 läuft ein Anschlußdraht 2 zur Kontaktierung der geteilten Tantalanode 1 in den Gehäuseinnenraum hinein, der auf der Innenseite der Durchführung 8 verzweigt und zu den beiden Tantal-Anodenschalen 11, 12 führt. Dort ist der verzweigte Anschlußdraht 2 mit den Tantal-Anodenschalen 11, 12 elektrisch leitend verbunden.

Am Boden 9 des Gehäusebechers 16 ist wiederum in zentraler Position ein Kathodenanschlußdraht 10 elektrisch leitend befestigt, um die Stromzuführung zur Kathodenfolie 17 zu gewährleisten. Letztere ist durch die Separationsfolie 4 vor einem Kurzschluß gegenüber der geteilten Tantalanode 1 gesichert.

Die in den Fig. 3 und 4 gezeigte Ausführungsform weist den Vorteil auf, daß die geteilte Anode ohne Binder geformt werden kann, indem die Tantal-Anodenschalen 11, 12 mit Tantalpulver gefüllt und im Hochvakuum gesintert werden. Durch eine geringere Fehlerwahrscheinlichkeit läßt sich so die Durchbruchspannung erhöhen.

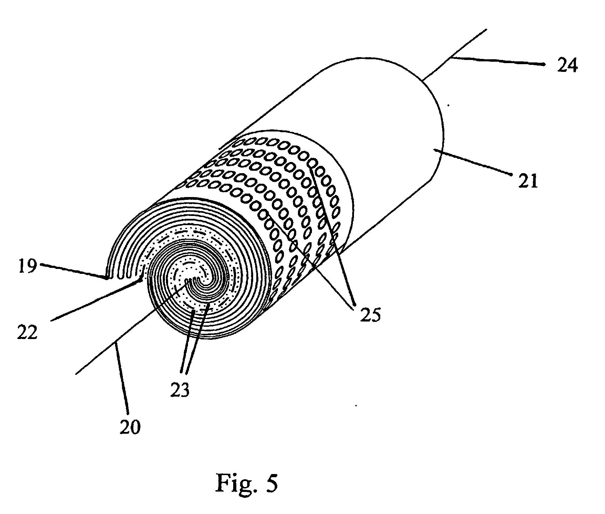

Fig. 5 zeigt als bevorzugte Ausführungsform der Erfindung einen Aluminium-Elektrolytkondensator. Bei diesem wird als Anode eine Aluminiumfolie 19 verwendet, die in an sich bekannter Weise in chloridhaltigen Ätzlösungen aufgerauht ist. Diese Aluminium-Anodenfolie 19 wird in mehrere Lagen gefaltet und zusammen mit einer Kathodenkontakt-Folie 22 (strichliert dargestellt), die mit einer fraktalen Iridium-Beschichtung (nicht dargestellt) versehen ist, unter beidseitiger Zwischenlage einer Separationsfolie 23 (punktiert dargestellt in Fig. 5) aufgewickelt. Die Kathodenfolie 22 ist elektrisch leitend mit dem Gehäusebecher 21 verbunden, der über einen Anschlußdraht 24 kontaktiert ist. Die Aluminium-Anodenfolie 19 ist mit einem Anodendraht 20 verschweißt, der analog der Ausführungsform nach Fig. 2 elektrisch isoliert durch den Gehäusebecher 21 hindurchgeführt ist. Die Aluminium-Anodenfolie 19 weist im übrigen Perforationen 25 auf, die zu einem guten elektrischen Kontakt zwischen Elektrolyten und der gesamten Anodenfolie sorgen. Weiterhin ist von Vorteil, daß bei dem Kondensator gemäß Fig. 5 gute Entladeeigenschaften durch geringe Diffusionswege aufgrund der vorhandenen Faltung, Wicklung und Perforierung von Anoden- und Kathodenfolie erreicht werden.

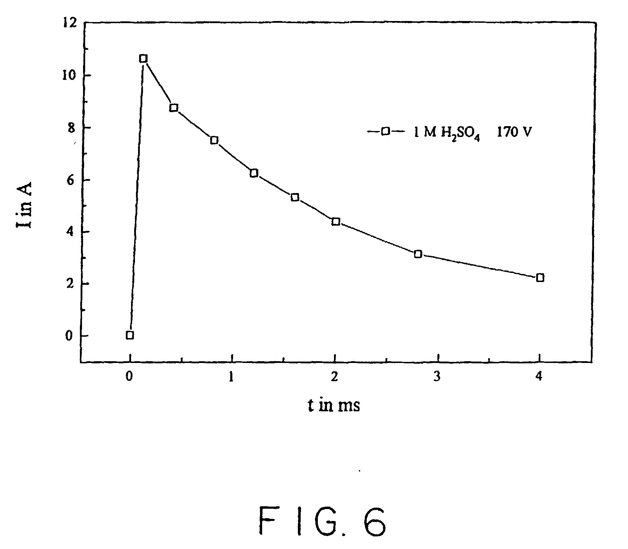

Fig. 6 zeigt den Entladepuls eines Tantal-Elektrolytkondensator mit einer Kapazität von 191 μF mit fraktalem Kathodenkontakt und 1-molarer Schwefelsäure als Betriebselektrolyten. Die Ladespannung betrug dabei 170V und der externe Lastwiderstand 16 Ohm. Der Entladespitzenstrom erreicht dabei einen Wert von mehr als 10 A.

Abschließend sind noch folgende allgemeine Hinweise zu geben:

Die Kombination einer fraktalen Iridium-Beschichtung mit den passivierenden Substratwerkstoffen Titan oder Tantal für den Kathodenkontakt des Kondensators gewährleistet die Langzeitstabilität des Kathodenkontaktes auch in stark sauren Betriebselektrolyten, wie verdünnter Schwefelsäure. Iridium weist nämlich, wie viele Platinmetalle, eine geringe Wasserstoffüberspannung auf. Eine mit Iridium beschichtete Titanfolie erreicht daher selbst bei einer Überlastung des Kathodenkontaktes mit einsetzender Wasserstoffentwicklung den Potentialbereich der aktiven Titanauflösung nicht.

Ferner muß bei der geometrischen Konstruktion der Kondensatoren auf kurze Diffusionswege im Sinterkörper geachtet werden. Auch muß der elektrochemische Serienwiderstand $R_{ESR}$ des Elektrolyten möglichst gering gehalten werden, um hohe Entladespitzenströme und gute Eigenschaften bei gepulsten Anwendungen zu erreichen. Saure Elektrolyte, wie verdünnte Schwefel- oder Phosphorsäure, besitzen hier eine hohe Leitfähigkeit und sind deshalb für die erfindungsgemäßen Tantal-Elektrolytkondensatoren besonders geeignet. Bei Aluminiumkondensatoren wirkt sich die oben angegebene Faltung und Wicklung in der erörterten Weise vorteilhaft auf die Entladeeigenschaften aus.

Zusammenfassend läßt sich durch die Kombination einer Tantalsinteranode oder eine geätzten Aluminiumfolie mit einem fraktal beschichteten Kathodenkontakt bei nassen Elektrolytkondensatoren die Energiedichte gegenüber herkömmlichen Konstruktionen verdoppeln. Saure Elektrolyte bei Tantalanoden oder eine geeignete Faltung und Wicklung einer Alumniumanode gewährleisten einen geringen Serienwiderstand und gutes Impulsverhalten. Die Einsatzgebiete des erfindungsgemäßen Kondensators reichen deshalb über die Anwendungen der biomedizinischen Technik - beispielsweise bei implantierbaren Defibrillatoren - hinaus und erfassen auch Blitzgeräte, Schaltnetzteile usw. Die Werkstoffkombination Tantal für die Anode und Iridium-Tantal bzw. Iridium-Titan für den Kathodenkontakt sorgt für eine hohe Langzeitstabilität.

**Patentansprüche**

1. Elektrolytkondensator, insbesondere Tantal-Elektrolytkondensator, mit

   - einer Metallanode (1),
   - einer durch Formierung der Metallanode (1, 11, 12, 13, 14, 19) darauf aufgebrachten nicht- leitenden Isolierschicht, zur Bildung des Dielektrikums des Elektrolytkondensators,
   - einem die Kathode des Elektrolytkondensators bildenden Elektrolyten in flüssiger, pastöser oder fester Form, und
   - einem flächigen Kathodenkontakt (5, 17, 22) zur Stromzuführung zum Elektrolyten,

   **dadurch gekennzeichnet, daß** der flächige Kathodenkontakt (5, 17, 22) zumindest im Bereich seiner Kontaktfläche mit dem Elektrolyten mit einer elektrisch leitenden Oberflächenbeschichtung (6) mit fraktaler Struktur versehen ist.

2. Elektrolytkondensator nach Anspruch 1, **dadurch gekennzeichnet, daß** die fraktale Beschichtung eine vorzugsweise durch Kathodenzerstäubung aufgebrachte Beschichtung (6) aus Iridium, Tantal oder Aluminium ist.

3. Elektrolytkondensator nach Anspruch 2, **dadurch gekennzeichnet, daß** die fraktale Beschichtung (6) des Kathodenkontaktes (5, 17, 22) durch Kathodenzerstäubung bei einem Wert des pd-Produkts aus Prozeßdruck p und Substrat-Target-Prostand d bei der Kathodenzerstäubung von etwa 0,5 mbar·cm aufgebracht ist.

4. Elektrolytkondensator nach einem der Ansprüche 1 bis 3, **dadurch gekennzeichnet, daß** der Kathodenkontakt (5, 17) aus Titan, Tantal oder Aluminium besteht.

5. Elektrolytkondensator nach einem der Ansprüche 1 bis 4, **gekennzeichnet durch** eine zwischen der formierten Metallanode (1, 11, 12, 13, 14, 19) und dem eine Oberflächen beschichtung mit fraktaler Struktur aufweisenden Kathodenkontakt (5, 17, 22) eingesetzte, poröse, elektrisch isolierende Separationsfolie (4, 23), die mit dem Elektrolyten getränkt ist.

6. Elektrolytkondensator nach einem der Ansprüche 1 bis 5, **gekennzeichnet durch** einen zylindrischen Gehäusebecher (5), der als Kathodenkontakt auf seiner Innenseite mit der Oberflächenbeschichtung (6) mit fraktaler Struktur versehen ist und in den isoliert eine zylindrische Sinteranode (1) aus Tantalpulver unter Zwischenlage einer Elektrolyt-getränkten Separationsfolie (4) eingesetzt ist.

7. Elektrolytkondensator nach einem der Ansprüche 1 bis 5, **dadurch gekennzeichnet, daß** der Kathodenkontakt (17, 22) aus einer mit einer Oberflächenbeschichtung mit fraktaler Struktur versehenen Kathodenfolie besteht.

8. Elektrolytkondensator nach Anspruch 7, **gekennzeichnet durch** einen vorzugsweise zylindrischen Gehäusebecher (16), in dessen Innenraum isoliert zwei vorzugsweise halbzylindrische Tantal-Anodenschalen (11, 12) mit eingelegten, vorzugsweise halbzylindrischen Sinteranoden (13, 14) aus Tantalpulver eingesetzt sind, wobei zwischen den beiden einander zugewandten planen Längsseiten (15) der Sinteranoden (13, 14) eine beidseitig mit einer Oberflächenbeschichtung (6) mit fraktaler Struktur versehene Kathodenfolie (17) als Kathodenkontakt unter jeweiliger Zwischenlage einer Elektrolyt-getränkten Separationsfolie (4) angeordnet ist.

9. Elektrolytkondensator nach Anspruch 8, **dadurch gekennzeichnet, daß** die Kathodenfolie (17) an ihrem Rand (18) mit dem Gehäusebecher (16) verschweißt ist.

10. Elektrolytkondenstor nach einem der Ansprüche 6 bis 9, **dadurch gekennzeichnet, daß** die Sinteranode (1, 11, 12, 13, 14) mit einem isoliert durch einen Deckel (7) des Gehäusebechers (5, 16) hindurchgeführten Anschlußdraht (2), insbesondere einem Tantaldraht, verbunden ist, dessen anodenseitiges Ende (3) in den Körper der Sinteranode (1) eingepreßt bzw. mit den Tautal-Anodenschalen (11, 12) elektrisch leitend verbunden ist.

11. Elektrolytkondensator nach einem der Ansprüche 8 bis 10, **dadurch gekennzeichnet, daß** der Gehäusebecher (5, 16) mit einem Kathodenanschlußdraht (10) zur elektrischen Kontaktierung des Kathodenkontaktes verbunden ist.

12. Elektrolytkondensator nach Anspruch 7, **dadurch gekennzeichnet, daß** in einem vorzugsweise zylindrischen Gehäusebecher (21) eine fraktal beschichtete Kathodenfolie (22) unter Zwischenlage einer Elektrolyt-getränkten Separationsfolie (23) zusammen mit einer formierten Anodenfolie (19) gewickelt angeordnet ist.

13. Elektrolytkondensator nach Anspruch 12, dadurch gekennzeichrtgt, daß die Anodenfolie (19) in einem in mehreren Lagen auf sich selbst gefalteten Zustand gewickelt ist.

14. Elektrolytkandensator nach Anspruch 13, **dadurch gekennzeichnet, daß** die Anodenfolie (19) mit Perforationen (25) versehen ist.

15. Elektrolytkondensator nach Anspruch 1, mit einer gesinterten Tantalanode, **dadurch gekennzeichnet, daß** die Tantalanode (1, 11, 12, 13, 14) durch einen nach dem Sintern einwirkenden Wärmebehandlungsprozeß mit Stickstoff dotiert ist.

**Claims**

1. An electrolytic capacitor, in particular a tantalum electrolytic capacitor with

   - a metal anode (1),
   - a non-conducting insulating layer applied to it by molding the metal anode (1, 11, 12, 13, 14, 19) for producing the dielectric of the electrolytic capacitor,
   - an electrolyte in liquid, pasty or solid form constituting the cathode of the electrolytic capacitor, and
   - a flat cathode contact (5, 17, 22) for supplying current to the electrolyte,

   **characterized in that**
   the flat cathode contact (5, 17, 22) is provided with an electrically conducting, fractal surface coating (6) having a fractal structure, at least in the area of its contact surface with the electrolyte.

2. The electrolytic capacitor in accordance with claim 1, **characterized in that** the fractal coating (6) consists of a material selected from iridium, tantalum or aluminum.

3. The electrolytic capacitor in accordance with claim 2, **characterized in that** the fractal coating (6) of the cathode contact (5, 17, 22) is applied by cathode sputtering at a value of the pd product of process pressure p and substrate target distance d during the cathode sputtering of approximately 0.5 mbar·cm.

4. The electrolytic capacitor in accordance with claim 1, **characterized in that** the cathode contact (5, 17) consists of a material selected from titanium, tantalum or aluminum.

5. The electrolytic capacitor in accordance with claim 1, **characterized by** a porous, electrically insulating separating foil (4, 23) saturated with the electrolyte and inserted between the molded metal anode (1, 11, 12, 12, 14, 19) and the cathode contact (5, 17, 22) showing a surface coating having a fractal structure.

6. The electrolytic capacitor in accordance with claim 1, **characterized by** a cylindrical housing cup (5) which, as the cathode contact, is provided with a surface coating (6) having a fractal structure, on its inside and into which a cylindrical sinter anode (1) made of tantalum powder is inserted in an insulating manner with an electrolyte-saturated separating foil (4) interposed.

7. The electrolytic capacitor in accordance with claim 1, **characterized in that** the cathode contact (17, 22) consists of a cathode foil provided with a surface coating having a fractal structure.

8. The electrolytic capacitor in accordance with claim 7, **characterized by** a cathode cup (16), into whose interior two tantalum anode shells (ii, 12) with inserted sinter anodes (13, 14) made of tantalum powder have been inserted in an insulating manner, wherein, as the cathode contact, a cathode foil (17), provided on both sides with a surface coating (6) having a fractal structure is arranged between the two facing fiat longitudinal sides (15) of the sinter anodes (13, 14), along with the respective interposition of an electrolyte-saturated separating foil (4)

9. The electrolytic capacitor in accordance with claim 8, **characterized in that** the cathode foil (17) is welded on its edge (18) with the housing cup (16)

10. The electrolytic capacitor in accordance with claim 6, **characterized in that** the sinter anode (1, 11, 12, 13, 14) is connected with a connecting wire (2) passed in an insulated manner through a cover (7) of the housing cup (5, 16), whose end (3) at the anode side is pressed into the body of the Sinter anode (1) or connected with the tantalum anode shells (11, 12) in an electrically conducting manner.

11. The electrolytic capacitor in accordance with claim 8, **characterized in that** the housing cup (5, 16) is connected with a cathode connecting wire (10) for the electrical contact with the cathode contact.

12. The electrolytic capacitor in accordance with claim 7, **characterized in that** a fractally coated cathode foil (22) is disposed in a housing cup (21) with the interposition of an electrolyte-saturated separating foil (23), wound together with a molded anode foil (19).

13. The electrolytic capacitor in accordance with claim 12, **characterized in that** the anode foil (19) is wound in a way where it is folded upon itself in several layers.

14. The electrolytic capacitor in accordance with claim 13, **characterized in that** the anode foil (19) is provided with perforations (25).

15. The electrolytic capacitor in accordance with claim I, with a sintered tantalum anode, **characterized in that** the tantalum anode (1, 11, 12, 13, 14) is doped with nitrogen by means of a heat treatment process acting on it after sintering.

**Revendications**

1. Condensateur électrolytique, en particulier condensateur électrolytique en tantale, avec

   * une anode métallique (1)
   * une couche isolante non conductrice, destinée à former le diélectrique du condensateur électrolytique, qui y est appliquée par l'activation de l'anode métallique (1, 11, 12, 13, 14, 19) ,
   * un électrolyte formant la cathode du condensateur électrolytique sous forme liquide, pâteuse ou solide et
   * un contact cathodique (5, 17, 22) plat destiné à conduire le courant à l'électrolyte,

   **caractérisé en ce que** le contact cathodique (5, 17, 22) plat est muni d'un revêtement de surface (6) électroconducteur avec une structure fractale au moins dans la zone de sa surface de contact avec l'électrolyte.

2. Condensateur électrolytique selon la revendication 1 **caractérisé en ce que** le revêtement fractal est un revêtement (6), appliqué de préférence par pulvérisation cathodique, en iridium, en tantale ou en aluminium.

3. Condensateur électrolytique selon la revendication 2 **caractérisé en ce que** le revêtement (6) fractal du contact cathodique (5, 17, 22) est appliqué par pulvérisation cathodique selon une valeur du produit de la pression de processus p et de la distance d entre le substrat et la cible pd, lors de la pulvérisation cathodique d'environ 0,5 mbar.cm.

4. Condensateur électrolytique selon l'une des revendications 1 à 3 **caractérisé en ce que** le contact cathodique (5, 17) est en titane, en tantale ou en aluminium.

5. Condensateur électrolytique selon l'une des revendications 1 à 4 **caractérisé par** une feuille de séparation (4, 23), qui est imprégnée avec l'électrolyte, électriquement isolante, poreuse, introduite entre l'anode métallique (1, 11, 12, 13, 14, 19) activée et le contact cathodique (5, 17, 22) présentant un revêtement de surface avec une structure fractale.

6. Condensateur électrolytique selon l'une des revendications 1 à 5 **caractérisé par** un boîtier de logement (5) cylindrique qui est muni, en tant que contact cathodique, du revêtement (6) de surface avec une structure fractale sur son côté intérieur et dans lequel est introduite de façon isolée une anode frittée (1) cylindrique en poudre de tantale, une feuille de séparation (4) imprégnée d'électrolyte étant placée entre les deux.

**7.** Condensateur électrolytique selon l'une des revendications 1 à 5 **caractérisé en ce que** le contact cathodique (17, 22) est constitué d'une feuille cathodique munie d'un revêtement de surface avec une structure fractale.

**8.** Condensateur électrolytique selon la revendication 7 **caractérisé par** un boîtier de logement (16) de préférence cylindrique dans l'espace intérieur duquel sont introduites de façon isolée deux couches anodiques en tantale (11, 12) de préférence semi-cylindriques avec des anodes frittées (13, 14) de préférence semi-cylindriques en poudre de tantale, dans lequel, entre les deux grands côtés (15) plans, tournés l'un vers l'autre, des anodes frittées (13, 14), est placée une feuille cathodique (17) munie des deux côtés d'un revêtement (6) de surface avec une structure fractale en tant que contact cathodique, une feuille de séparation (4) imprégnée d'électrolyte étant placée entre les deux.

**9.** Condensateur électrolytique selon la revendication 8 **caractérisé en ce que** la feuille cathodique (17) est soudée au boîtier de logement (16) sur son bord (18).

**10.** Condensateur électrolytique selon l'une des revendications 6 à 9 **caractérisé en ce que** l'anode frittée (1, 11, 12, 13, 14) est reliée à un fil métallique de raccordement (2) guidé de manière isolée à travers un couvercle (7) du boîtier de logement (5, 16), en particulier à un fil en tantale, dont l'extrémité (3) vers l'anode est enfoncée dans le corps de l'anode frittée (1) ou est reliée de façon électroconductrice aux couches anodiques en tantale (11, 12).

**11.** Condensateur électrolytique selon l'une des revendications 8 à 10 **caractérisé en ce que** le boîtier de logement (5, 16) est relié à un fil métallique de raccordement cathodique (10) pour assurer le contact électrique du contact cathodique.

**12.** Condensateur électrolytique selon la revendication 7 **caractérisé en ce que** dans un boîtier de logement (21) de préférence cylindrique est placée, en étant enroulée conjointement avec une feuille anodique (19) activée, une feuille cathodique (21) revêtue fractalement, une feuille de séparation (23) imprégnée d'électrolyte étant placée entre les deux.

**13.** Condensateur électrolytique selon la revendication 12 **caractérisé en ce que** la feuille anodique (19) est enroulée dans un état à plusieurs couches repliées sur elles-mêmes.

**14.** Condensateur électrolytique selon la revendication 13 **caractérisé en ce que** la feuille anodique (19) est munie de perforations (25).

**15.** Condensateur électrolytique selon la revendication 1 avec une anode en tantale frittée **caractérisé en ce que** l'anode en tantale (1, 11, 12, 13, 14) est dotée d'azote par une opération de traitement thermique appliquée après le frittage.

FIG. 1

FIG. 3

FIG.2

FIG.4

Fig. 5

F I G. 6